# EUROPÄISCHE PATENTSCHRIFT

(11) **EP 3 912 004 B1**
(45) Veröffentlichungstag und Bekanntmachung des Hinweises auf die Patenterteilung: **17.12.2025**
(21) Anmeldenummer: 20705623.5
(22) Anmeldetag: 05.02.2020
(51) Int. Cl.: G05D 1/00, B64D 31/06

(54) **VERFAHREN ZUR STEUERUNG EINES MULTIROTOR-FLUGGERÄTS ZUM VERTIKALEN STARTEN UND LANDEN SOWIE MULTIROTOR-FLUGGERÄT**
METHOD FOR CONTROLLING A MULTIROTOR AIRCRAFT FOR VERTICAL TAKE-OFF AND LANDING AND MULTIROTOR AIRCRAFT
PROCÉDÉ DE COMMANDE D'UN AERONEF MULTIROTOR A DECOLLAGE ET ATTERRISSAGE VERTICAL ET AÉRONEF MULTIROTOR

(30) Priorität: 19.02.2019 DE 102019202241
(43) Veröffentlichungstag der Anmeldung: 24.11.2021
(73) Patentinhaber: Germandrones GmbH, 10555 Berlin (DE)
(72) Erfinder: ARNOLD, Felix, 70180 Stuttgart (DE); TOMENENDAL, Martin, 92339 Beilngries (DE)
(74) Vertreter: Patentanwälte Magenbauer & Kollegen Partnerschaft mbB
(86) Internationale Anmeldenummer: PCT/EP2020/052887
(87) Internationale Veröffentlichungsnummer: WO 2020/169346

(56) Entgegenhaltungen:
- WO-A2-2013/174751
- M. SGHAIRI ET AL: "Challenges in Building Fault -Tolerant Flight Control System for a Civil Aircraft", IAENG INTERNATIONAL JOURNAL OF COMPUTER SCIENCE, 35:4, 20 November 2008 (2008-11-20), XP055533225, Retrieved from the Internet <URL:http://www.iaeng.org/IJCS/issues_v35/issue_4/IJCS_35_4_07.pdf> [retrieved on 20181212]
- ANDREW J KORNECKI ET AL: "APPROACHES TO ASSURE SAFETY IN FLY-BY-WIRE SYSTEMS: AIRBUS VS. BOEING", 10 August 2004 (2004-08-10), XP055686835, Retrieved from the Internet <URL:https://pdfs.semanticscholar.org/d4ac/17fcc0db3396a3219785bd2b3e981c7117a9.pdf?_ga=2.56504619.1014010764.1587129590-484601563.1552319601> [retrieved on 20200417]
- ELLIS F. HITT ET AL: "HANDBOOK--VOLUME I, VALIDATION OF DIGITAL SYSTEMS IN AVIONICS AND FLIGHT CONTROL APPLICATIONS", 1 July 1983 (1983-07-01), XP055686838, Retrieved from the Internet <URL:https://apps.dtic.mil/dtic/tr/fulltext/u2/a133222.pdf> [retrieved on 20200417]

## Beschreibung

Die Erfindung betrifft ein Verfahren zur Steuerung eines Multirotor-Fluggeräts zum vertikalen Starten und Landen, gemäß Anspruch 1.

Ferner betrifft die Erfindung ein Multirotor-Fluggerät zum vertikalen Starten und Landen, gemäß Anspruch 8.

Multirotor-Fluggeräte mit mehreren Rotoren, insbesondere mit vier oder mehr Rotoren, sind seit langem Stand der Technik. Die Entwicklung dieser Multirotor-Fluggeräte - bemannt oder unbemannt - ist in den letzten Jahren immer weiter vorangetrieben worden.

EP 3 243 749 A1 offenbart ein unbemanntes Luftfahrzeug umfassend einen Rumpf, einen linken und einen rechten Flügel, die mit dem Rumpf verbunden sind, um im Vorwärtsflug Auftrieb zu erzeugen, eine linke Schuberzeugungsvorrichtung, die von dem linken Flügel getragen wird, und einer Vorrichtung zur Erzeugung eine rechte Schuberzeugungsvorrichtung, die von dem rechten Flügel getragen wird. Das unbemannte Luftfahrzeug umfasst ferner einen vertikalen Stabilisator, eine obere Schub erzeugende Vorrichtung, die an einem oberen Abschnitt des vertikalen Stabilisators montiert ist, und eine untere Schub erzeugende Vorrichtung, die an einem unteren Abschnitt des vertikalen Stabilisators montiert ist. Eine Bordstromquelle ist zum Antreiben der Schuberzeugungsvorrichtungen vorgesehen. Die linke, rechte, obere und untere Schuberzeugungseinrichtung sorgen für einen Vorwärtsschub während des Horizontalfluges und auch für einen Vertikalschub, damit das unbemannte Luftfahrzeug senkrecht starten und landen kann. Zur Steuerung des unbemannten Luftfahrzeugs wird ein Temperatur-, Druck- und Beschleunigungssensoren, ein Magnetometer, ein Gyroskop und ein globales Positionsbestimmungssystem (GPS) aufweisendes Flugkontrollsystem verwendet. Nachteilig daran ist, dass die Steuerung des beschriebenen unbemannten Luftfahrzeugs sehr anfällig gegenüber Störungen oder Ausfällen der Messtechnik, insbesondere Sensorik, ist.

Die WO 2013/174751 A2 offenbart ein Verfahren und ein System zum Steuern eines Fluggeräts in Form eines Multicopters, der mehrere, vorzugsweise in einer gemeinsamen Rotorebene angeordnete, redundante Rotoren aufweist, um einerseits Auftrieb und andererseits durch Neigung der wenigstens einen Rotorebene auch Vortrieb zu erzeugen, wobei Lageregelung und Steuerung des Multicopters durch Veränderungen von Rotordrehzahlen in Abhängigkeit von Piloten-Steuerbefehlen erfolgen, wobei die Rotoren über ein ausfallsicheres Netzwerk miteinander datentechnisch verbunden sind und ihren jeweiligen Betriebszustand, insbesondere ihre Rotordrehzahl, in dem Netzwerk kommunizieren; in dem Netzwerk eine erste Mehrzahl an redundanten Sensoren enthalten sind, die steuerungsrelevante Daten ermitteln und in dem Netzwerk bereitstellen, insbesondere Neigung, Beschleunigung, Drehrate und/oder Position in allen drei Raumachsen des Multicopters; weiterhin in dem Netzwerk eine zweite Mehrzahl an Reglern enthalten sind, die autonom und dezentral anhand der Sensordaten, und vorzugsweise außerdem anhand der Rotor-Betriebszustände, jeweils ein Regelsignal für jeweils wenigstens einen Rotor bestimmen und in dem Netzwerk bereitstellen; die Rotoren mittels der Regelsignale so geregelt werden, dass ein Flugverhalten des Multicopters im Wesentlichen der Vorgabe durch den Piloten-Steuerbefehl entspricht.

Überdies offenbaren die Veröffentlichungen XP055533225 (M. Sghairi et al: "Challenges in Building Fault-Tolerant Flight Control System for a Civil Aircraft"), XP055686835 (A. Kornecki et al: "Approaches to assure safety in Fly-by-wire systems: Airbus vs. Boeing") and XP055686838 (E. Hitt et al: "Handbook -- Volume I, Validation of digital systems in avionics and flight control applications") Systemvergleiche zwischen unterschiedlichen Steuerungsverfahren für Fluggeräte.

Aufgabe der Erfindung ist es daher ein verbessertes Verfahren zur Steuerung eines Multirotor-Fluggeräts zum vertikalen Starten und Landen und das entsprechende Multirotor-Fluggerät bereitzustellen ohne einer Anfälligkeit der Messtechnik, insbesondere Sensorik, gegenüber Störungen oder Ausfällen ausgeliefert zu sein.

Diese Aufgabe wird bei einem Verfahren der eingangs genannten Art dadurch gelöst, dass die Vergleichermittel einen Rang in einer Vergleichermittel-Rangfolge des Multirotor-Fluggeräts einnehmen und die Multirotor-Fluggerät Kontrolleinheiten einen Rang in einer Multirotor-Fluggerät Kontrolleinheiten-Rangfolge des Multirotor-Fluggeräts einnehmen, wobei das ranghöchste Vergleichermittel mit den Multirotor-Fluggerät Kontrolleinheiten des gleichen und untergeordneten Rangs verbunden ist und die anderen Vergleichermittel jeweils mit den Multirotor-Fluggerät Kontrolleinheiten des über-, gleich- und untergeordneten Rangs verbunden sind, und die Auswerteeinheit gemäß Schritt e) dann in Abhängigkeit von einem als Auswertungsergebniswert der Auswerteeinheit verwendeten Vergleichsergebniswert einen Steuerbefehl bereitstellt, sobald dieser eine genaue Übereinstimmung der im Vergleichermittel miteinander verglichenen Steuerungsdaten oder eine Übereinstimmung innerhalb eines Toleranzbereichs bezogen auf die Steuerungsdaten feststellt, wobei ein Vergleich der Steuerungsdaten entsprechend der Rangfolge der Vergleichermittel vom ranghöchsten Vergleichermittel zum rangniedersten Vergleichermittel erfolgt, sobald der Vergleichsergebniswert keine Übereinstimmung innerhalb eines Toleranzbereichs bezogen auf die Steuerungsdaten feststellt. Durch die im Multirotor-Fluggerät abgebildete Redundanz an Multirotor-Fluggerät Kontrolleinheiten und Auswerteeinheiten wird gewährleistet, dass die Auswerteeinheit des Multirotor-Fluggeräts auch bei Ausfall redundanter Messtechnik, insbesondere der Sensorik, einen Steuerbefehl ermittelt und diesen zur Steuerung der Antriebseinheiten der Rotoren an die mit der Antriebseinheit verbundenen Steuereinheiten übermittelt. Hierdurch stets sichergestellt, dass das ranghöchste eine Übereinstimmung im Vergleich der Steuerungsdaten liefernde Vergleichermittel der Auswerteeinheit einen Steuerbefehl an die Steuereinheit übermittelt. In einfachster Weise entspricht so der durch die Auswerteeinheit bereitgestellte Steuerbefehl den Steuerungsdaten der ranghöchsten Multirotor-Fluggerät Kontrolleinheit, die Steuerungsdaten für einen Vergleich im entscheidenden Vergleichermittel übermittelt.

Bevorzugt weist der Toleranzbereich eine örtliche Toleranz und/oder eine zeitliche Toleranz auf. Aufgrund von Rechenungenauigkeiten und Rundungsfehlern ist das Einführen von Toleranzen - örtlich und/oder zeitlich - sehr vorteilhaft. Besonders bevorzugt weist der Toleranzbereich eine Abweichung kleiner gleich 5 % bezogen auf dem Vergleichermittel übermittelte Steuerungsdaten auf. Ganz besonders bevorzugt weist der Toleranzbereich eine Abweichung kleiner gleich 5 % bezogen auf die ranghöchsten dem Vergleichermittel übermittelten Steuerungsdaten auf. Hierdurch wird sichergestellt, dass die Steuerungsdaten bevorzugterweise von der ranghöchsten Multirotor Flugkontrolleinheit verwendet werden und nur bei einem Ausfall dieser andere Steuerungsdaten rangniedriger Multirotor Flugkontrolleinheiten Verwendung finden.

Vorteilhafterweise übermittelt die Auswerteeinheit einen Warnhinweis an die Steuerbefehleinheit, sobald der Auswerteergebniswert außerhalb des Toleranzbereichs liegt. Ein solcher Warnhinweis an die Steuerbefehleinheit in geeigneter Form, bspw. durch Aufblicken einer Kontrollleuchte, offenbart Schwierigkeiten der Auswerteeinheit beim Ermitteln des Steuerbefehls, bspw. im ranghöchsten Vergleichermittel. Aufgrund des Warnhinweises sind anschließend Fehleranalysen oder Notprogramme einzuleiten. Vorteilhafterweise stellt die Auswerteeinheit einen Steuerbefehl für eine Notlandung bereit, sobald der Auswerteergebniswert des rangniedrigsten Vergleichermittels außerhalb des Toleranzbereichs liegt.

Entsprechend einer vorteilhaften Ausgestaltung des erfindungsgemäßen Verfahrens weist die Abtastrate gemäß Schritt a) eine Frequenz von 1 Hz bis 2 kHz auf, insbesondere von 200 Hz bis 1,0 kHz. Durch die hohen Abtastraten werden der Multirotor Flugkontrolleinheit sehr viele Sensordaten übermittelt, die diese in Steuerungsdaten für die Auswerteeinheit umwandelt, sodass diese in der Auswerteinheit für eine im Steuerbefehl resultierende Auswertung bereitstehen. Je höher die Abtastrate in Schritt a) ist, desto kleiner sind die Abweichungen zwischen einer vorgegebenen (Sollwert) und einer abgeflogenen (Istwert) Flugbahn des Multirotor-Fluggeräts.

Diese Aufgabe wird bei einem Multirotoren-Fluggerät der eingangs genannten Art dadurch gelöst, dass die Vergleichermittel einen Rang in einer Vergleichermittel-Rangfolge aufweisen. Durch die im Multirotor-Fluggerät abgebildete Redundanz an Multirotor-Fluggerät Kontrolleinheiten und Auswerteeinheiten wird gewährleistet, dass die Auswerteeinheit des Multirotor-Fluggeräts auch bei Ausfall redundanter Messtechnik, insbesondere der Sensorik, einen Steuerbefehl ermittelt und diesen zur Steuerung der Antriebseinheiten der Rotoren an die mit der Antriebseinheit verbundenen Steuereinheiten übermittelt. Die Steuerungsdaten der Multirotor-Fluggerät Kontrolleinheiten werden ebenfalls vorzugsweise softwarebasiert bereitgestellt. Vorteilhafterweise sind die Multirotor-Fluggerät Kontrolleinheiten als Rechner, insbesondere als Embeded PCs oder dgl., ausgebildet. Weiter vorteilhaft ist das ranghöchste Vergleichermittel mit den Multirotor-Fluggerät Kontrolleinheiten des gleichen und untergeordneten Rangs verbunden und die anderen Vergleichermittel sind jeweils mit den Multirotor-Fluggerät Kontrolleinheiten des über-, gleich- und untergeordneten Rangs verbunden. Hierdurch kann ein vollständiger Vergleich innerhalb der Vergleichermittel durchgeführt werden, wobei alle Steuerungsdaten einer Multirotor-Fluggerät Kontrolleinheit mit denen einer im Rang benachbarten Multirotor-Fluggerät Kontrolleinheit verglichen werden.

In einer vorteilhaften Ausgestaltung des Flugdatensystems weist dieses einen Sensor zur Geschwindigkeitsmessung, einen Sensor zur Höhenbestimmung, einen Sensor zur Temperaturbestimmung und/oder einen Sensor zur Bestimmung der Steigrate auf. Hierdurch werden weitere wichtige Sensordaten ermittelt, die ein ggf. autonomes Fliegen des Multirotor-Fluggeräts befördern.

Die Auswerteeinheit weist Vergleichermittel, insbesondere zwei Vergleichermittel, auf. Durch die Vergleichermittel der Auswerteeinheit wird, insbesondere softwarebasiert, durch einen Vergleich der Steuerungsdaten der Steuerbefehl ermittelt

Das Multirotor-Fluggerät umfasst zwei Flugdatensysteme, drei Flugkontrollsysteme und drei Multirotor-Fluggerät Kontrolleinheiten. Vorgenannte Anzahl an Flugdatensysteme, Flugkontrollsystemen und Multirotor-Fluggerät Kontrolleinheiten ist optimal für einen sicheren Betreib des Multirotor-Fluggeräts ausgelegt. Das Verhältnis von Redundanz an Komponenten zu Investitionskosten und/oder Gewicht der einzelnen Komponenten für das Multirotor-Fluggerät ist in dieser Ausgestaltung sehr vorteilhaft.

Bei einer vorteilhaften Weiterbildung sind zwei Multirotor-Fluggerät Kontrolleinheiten mit einem Flugdatensystem und einem Flugkontrollsystem und eine Multirotor-Fluggerät Kontrolleinheit mit einem Flugkontrollsystem verbunden.

Die Vergleichermittel sind geeignet, um die Steuerungsdaten der Multirotor-Fluggerät Kontrolleinheiten vergleichen zu können und abhängig von einem als Auswertungsergebniswert der Auswerteeinheit verwendeten Vergleichsergebniswert einen Steuerbefehl bereitstellen zu können. Der Auswertungsergebniswert ist ebenso wie ein Vergleichsergebniswert ein Wert der angibt, ob die miteinander verglichenen Steuerungsdaten genau oder im Bereich einer vorgegebenen Toleranz übereinstimmen. Bei einer Übereinstimmung signalisiert der Auswertungsergebniswert die Ausgabe eines Steuerbefehls.

Bevorzugt ist das Flugdatensystem und/oder das Flugkontrollsystem geeignet Sensordaten hochfrequent mit einer Abtastrate von 1 Hz bis 2 kHz zu ermitteln. Besonders bevorzugt ist eine Abtastrate von 200 Hz bis 1,0 kHz. Durch die hohen Abtastraten werden der Multirotor Flugkontrolleinheit sehr viele Sensordaten übermittelt, die diese in Steuerungsdaten für die Auswerteeinheit umwandelt, sodass diese in der Auswerteinheit für eine im Steuerbefehl resultierende Auswertung bereitstehen. Je höher die Abtastrate desto kleiner die Abweichungen zwischen einer vorgegebenen (Sollwert) und einer abgeflogenen (Istwert) Flugbahn des Multirotor-Fluggeräts, da aus allen Sensordaten einer Abtastung ein Steuerbefehl resultiert. Entsprechend einer bevorzugten Ausbildung des Multirotor-Fluggeräts ist das Positionsbestimmungssystem ein globales Navigationssatellitensystem oder ein globales Positionsbestimmungssystem. Diese Systeme haben den Vorteil, dass diese auf dem Markt kommerziell verfügbar sind.

Das Datenübertragungssystem ist ein Feldbussystem, bevorzugt ein serielles Bussystem, besonders bevorzugt ein Controller Area Network. Diese Datenübertragungssysteme haben ebenfalls den Vorteil, auf dem Markt kommerziell verfügbar zu sein.

Nach einer zusätzlichen vorteilhaften Ausgestaltung des Multirotor-Fluggeräts weist die Versorgungseinheit Akkumulatoren und/oder eine Strömungsmaschine, insbesondere eine Kleingasturbine, auf. Die Kleingasturbine kann auch lediglich als Range Extender dienen.

Zudem umfasst das Multirotor-Fluggerät mindestens ein Sensor zur Radiohöhenbestimmung.

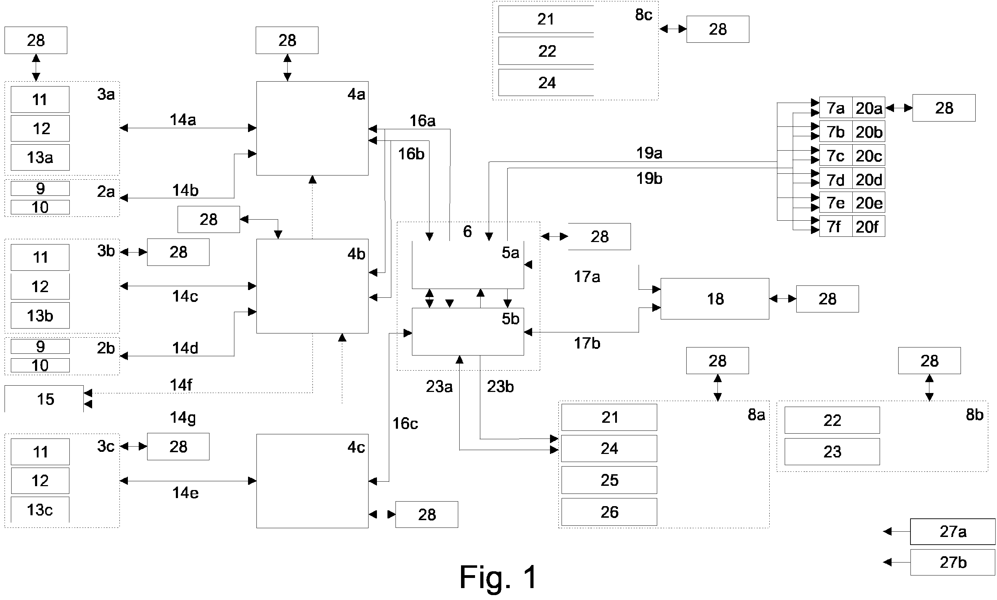

Nachfolgend wird die Erfindung anhand der beiliegenden Zeichnung näher erläutert. In dieser zeigen
- Figur 1: ein bevorzugtes Grundfließschema zur Steuerung eines Multirotor-Fluggeräts zum vertikalen Starten und Landen.

Fig. 1 zeigt ein bevorzugtes Grundfließschema einer Steuerung 1 zur Steuerung eines Multirotor-Fluggeräts zum vertikalen Starten und Landen.

Die Steuerung weist unterschiedliche Komponenten insbesondere Flugdatensysteme 2, Flugkontrollsysteme 3, Multirotor-Fluggerät Flugkontrolleinheiten 4, eine Vergleichermittel 5 umfassende Auswerteeinheit 6, Steuereinheiten 7 und Steuerbefehleinheiten 8 auf. In dem in Fig. 1 dargestellten Ausführungsbeispiel weist die Steuerung 1 zwei Flugdatensysteme 2, drei Flugkontrollsysteme 3, drei Multirotor Flugkontrolleinheiten 4, eine zwei Vergleichermittel 5 umfassende Auswerteeinheit 6, sechs Steuereinheiten 7 und drei Steuerbefehleinheiten 8 auf. Somit sind alle unterschiedlichen Komponenten der Steuerung 1 redundant vorhanden.

Die zwei Flugdatensysteme 2a, 2b umfassen jeweils mindestens einen Temperatursensor 9 zur Messung der Umgebungstemperatur und eine Staudrucksonde 10 zur Messung der Geschwindigkeit des Multirotor-Fluggeräts. Das Flugdatensystem 2 ist geeignet weitere Sensoren, wie bspw. einen barometrischen Drucksensor zur Messung der atmosphärischen Höhe in der sich das Multirotor-Fluggerät aktuell befindet oder einen Sensor zur Bestimmung der Steigrate, aufzunehmen. Die von den Sensoren der Flugdatensysteme 2 bevorzugt mit einer eine Frequenz von 1 Hz bis 2 kHz, insbesondere einer Frequenz von 200 Hz bis 1,0 kHz, aufweisenden Abtastrate erfassten Messwerte werden als Sensordaten weitergegeben.

Die drei Flugkontrollsysteme 3a, 3b und 3c weisen jeweils ein ein Positionsbestimmungssystem 11, einen Magnetfeldsensor 12 und eine drei Beschleunigungssensoren und drei Drehratensensoren aufweisende inertiale Messeinheit 13 umfassendes Messsystem zur Bestimmung von Roll-Nick-Gier-Winkeländerungen auf. Die Sensoren der Flugkontrollsysteme 3 werden ebenfalls bevorzugt mit einer eine Frequenz von 1 Hz bis 2 kHz, insbesondere einer Frequenz von 200 Hz bis 1,0 kHz, abgetastet. Besonders bevorzugt sind die Abtastraten von Flugdatensystem 2 und Flugkontrollsystem 3 aneinander angepasst.

Die inertiale Messeinheit 13 dient zur Erfassung der sechs möglichen kinematischen Freiheitsgrade. Hierzu verfügt diese über drei jeweils aufeinander senkrecht stehende Beschleunigungssensoren, die eine translatorische Bewegung in der x-Achse, der y-Achse und/oder z-Achse erfassen und drei senkrecht zueinander angebrachten Drehratensensoren, die rotierende Bewegungen um die x-Achse, die y-Achse und/oder die z-Achse erfassen. Die inertiale Messeinheit 13 liefert als Messwerte somit drei lineare Beschleunigungswerte für die translatorische Bewegung und drei Winkelgeschwindigkeiten für die Drehraten. Aus diesen Messwerten wird nach Kompensation der Erdbeschleunigung durch Integration die lineare Geschwindigkeit und durch nochmalige Integration die Position im Raum bezogen zu einem Referenzpunkt als Sensordaten ermittelt. Die Integration der drei Winkelgeschwindigkeiten liefert daher, bezogen zu einem Referenzpunkt, die Orientierung im Raum. Die inertialen Messeinheiten 13 können bspw. als Faserkreisel oder Laserkreisel für hohe Anforderungen an die Genauigkeit und Stabilität und mikro-elektro-mechanische Systeme für geringe Anforderungen an die Genauigkeit und Stabilität ausgebildet sein. Im Ausführungsbeispiel sind die inertialen Messeinheiten 13a und 13b als Faserkreisel und die inertiale Messeinheit 13c als mikro-elektro-mechanisches System ausgebildet.

Bevorzugterweise ist das Positionsbestimmungssystem 11 ein globales Navigationssatellitensystem der ein globales Positionsbestimmungssystem. Der Magnetfeldsensor 12 wird ebenfalls zur Lagebestimmung eingesetzt. Die Messwerte von Positionsbestimmungssystem 11 und Magnetfeldsensor 12 werden verwendet, um die Messwerte der Beschleunigungssensoren zur Verbesserung der Lagebestimmung zu referenzieren.

Die Flugdatensysteme 2 und die Flugkontrollsysteme 3 sind jeweils zum Empfangen, Verarbeiten und Senden von Daten, insbesondere von Sensordaten, geeignet. Der Datenübertragung erfolgt über Datenübertragungssysteme 14 bspw. Feldbussysteme.

Die Multirotor-Fluggerät Kontrolleinheiten 4a, 4b und 4c sind auch zum Empfangen, Verarbeiten und Senden von Daten geeignet, um auf Basis eines vorgegebenen Algorithmus aus von dem Flugdatensystem 2 und/oder dem Flugkontrollsystem 3 bereitgestellten Sensordaten Steuerungsdaten erstellen zu können.

Im Ausführungsbeispiel ist die Multirotor-Fluggerät Kontrolleinheit 4a mit dem Flugdatensystem 2a und dem Flugkontrollsystem 3a über ein als Pfeilverbindung dargestelltes Datenübertragungssystem 14a bzw. 14b, die Multirotor-Fluggerät Kontrolleinheit 4b ist mit dem Flugdatensystem 2b und dem Flugkontrollsystem 3b über ein als Pfeilverbindung dargestelltes Datenübertragungssystem 14c bzw. 14d und die Multirotor-Fluggerät Kontrolleinheit 4c ist mit dem Flugkontrollsystem 3c über ein als Pfeilverbindung dargestelltes Datenübertragungssystem 14e verbunden. Die Richtung der Datenübertragung wird durch die Pfeilrichtung der Pfeilverbindungen angedeutet.

Ein Radarhöhenmesser 15 zur Bestimmung der exakten Flughöhe des Multirotor-Fluggeräts nach dem Radarverfahren ist gemäß dem Grundfließschema der Steuerung 1 zusätzlich vorhanden. Dieses ist ebenfalls zum Empfangen, Verarbeiten und Senden von Daten, insbesondere der auch als Sensordaten bezeichneten Höhenmessdaten, geeignet und mittels Datenübertragungssystem 14f bzw. 14g jeweils mit den Multirotor-Fluggerät Kontrolleinheiten 4a und 4b verbunden.

Des Weiteren umfasst die Steuerung 1 eine zum Empfangen, Verarbeiten und Senden von Daten, insbesondere der von den Multirotor-Fluggerät Kontrolleinheiten 4a, 4b und 4c erstellten Steuerungsdaten, geeignete Auswerteeinheit 6. Die Auswerteeinheit 6 ist mit den Multi Rotor-Fluggerät Kontrolleinheiten 4a, 4b und 4c über die Datenübertragungssysteme 16a, 16b und 16c verbunden. Die Richtung der Datenübertragung wird durch die Pfeilrichtung der Pfeilverbindungen angedeutet. Die Auswerteeinheit 5 ist konfiguriert, um die Steuerungsdaten der Multirotor-Fluggerät Kontrolleinheiten 4a, 4b und 4c auswerten zu können und in Abhängigkeit von einem Auswertungsergebniswert einen Steuerbefehl bereitstellen zu können.

Hierzu umfasst die Auswerteinheit 6 mindestens ein Vergleichermittel 5. Im Ausführungsbeispiel weist die Auswerteeinheit 6 zwei Vergleichermittel 5a und 5b auf. Hierbei nehmen die Vergleichermittel 5a und 5b einen Rang in einer Vergleichermittel-Rangfolge des Multirotor-Fluggeräts ein und die Multirotor-Fluggerät Kontrolleinheiten 4a, 4b und 4c nehmen einen Rang in einer Multirotor-Fluggerät Kontrolleinheiten-Rangfolge des Multirotor-Fluggeräts ein. Im Ausführungsbeispiel entspricht die Rangfolge der alphabetischen Durchnummerierung, wobei das ranghöchste Vergleichermittel 5a mit den Multirotor-Fluggerät Kontrolleinheiten 4a und 4b des gleichen und untergeordneten Rangs und das untergeordnete Vergleichermittel 5b jeweils mit den Multirotor-Fluggerät Kontrolleinheiten 4a, 4b und 4c des über-, gleich- und untergeordneten Rangs verbunden ist.

Die Auswerteeinheit 6 stellt nun in Abhängigkeit von einem als Auswertungsergebniswert der Auswerteeinheit 6 verwendeten Vergleichsergebniswert einen Steuerbefehl bereit, sobald dieser eine genaue Übereinstimmung der im Vergleichermittel 5 miteinander verglichenen Steuerungsdaten oder eine Übereinstimmung innerhalb eines Toleranzbereichs bezogen auf die Steuerungsdaten feststellt, wobei ein Vergleich der Steuerungsdaten entsprechend der Rangfolge der Vergleichermittel 5 vom ranghöchsten Vergleichermittel 5a zum rangniedersten Vergleichermittel 5b erfolgt. Der im Vergleichermittel hinterlegte Toleranzbereich kann eine örtliche Toleranz, für eine Abweichung der Steuerungsdaten in ihrer örtlichen Komponente, und/oder eine zeitliche Toleranz, für eine Abweichung der Steuerungsdaten in ihrer zeitlichen Komponente, aufweisen. Die Steuerungsdaten könne sich also in örtlicher und zeitlicher Hinsicht unterscheiden. Bevorzugt weist der Toleranzbereich eine Abweichung - örtlich und/oder zeitlich - kleiner gleich 5 % bezogen auf dem Vergleichermittel 5 übermittelten Steuerungsdaten auf. Besonders bevorzugt weist der Toleranzbereich eine Abweichung - örtlich und/oder zeitlich - kleiner gleich 5 % bezogen auf die ranghöchsten dem Vergleichermittel 5 übermittelten Steuerungsdaten, hier somit die Steuerungsdaten der Multirotor-Fluggerät Kontrolleinheit 4a auf. Ein rangniedrigeres Vergleichermittel 5, hier das Vergleichermittel 5b wird für die Erzeugung eines Steuerbefehls nur benötigt, sobald der Vergleichsergebniswert im ranghöheren Vergleichermittel 5, hier Vergleichermittel 5a, keine Übereinstimmung innerhalb eines Toleranzbereichs bezogen auf die Steuerungsdaten liefert.

Die Auswerteeinheit 6 übermittelt einen Warnhinweis an die Steuerbefehleinheit 8, sobald der Auswerteergebniswert außerhalb des vorgegebenen Toleranzbereichs liegt. Hierdurch wird in der Steuerbefehleinheit 8 angezeigt, dass die die Vergleichermittel 5 umfassende Auswerteeinheit 6 Probleme bei der Auswertung der Steuerungsdaten hat.

Bei einer genauen Übereinstimmung bzw. einer Überweinstimmung im Toleranzbereich der Steuerungsdaten im Vergleichermittel 5 der Auswerteinheit 6 werden jeweils die Steuerungsdaten der ranghöheren Multirotor-Fluggerät Kontrolleinheit 4 als Steuerbefehl ausgegeben. Stimmen beispielsweise im Ausführungsbeispiel im Vergleichermittel 5a die Steuerungsdaten genau bzw. im Toleranzbereich überein, so dienen als Steuerbefehl die Steuerungsdaten der Multirotor-Fluggerät Kontrolleinheit 4a.

Wird im ranghöchsten Vergleichermittel 5, hier Vergleichermittel 5a, kein die Ausgabe eines Steuerbefehl veranlassender als Auswertungsergebniswert genutzter Vergleichsergebniswert erzielt, d.h. es gibt keine genaue Übereinstimmung der im Vergleichermittel 5 verglichenen Steuerungsdaten bzw. keine Übereinstimmung der im Vergleichermittel 5 verglichenen Steuerungsdaten innerhalb eines Toleranzbereichs, so erfolgt ein zweiter Vergleich im rangniedrigeren Vergleichermittel 5, hier Vergleichermittel 5b. Der zweite Vergleich im rangniedrigeren Vergleichermittel 5, hier Vergleichermittel 5b, erfolgt im Ausführungsbeispiel als Abgleich der Steuerungsdaten der höher- oder gleichrangigen Multirotor-Fluggerät Kontrolleinheiten 4 untereinander, hier der Multirotor-Fluggerät Kontrolleinheiten 4a und 4b, und jeweils mit den Steuerungsdaten der rangniedrigeren Multirotor-Fluggerät Kontrolleinheit 4c.

Bei einer genauen Übereinstimmung bzw. einer Überweinstimmung innerhalb eines Toleranzbereichs der Steuerungsdaten im Vergleichermittel 5b der Auswerteinheit 6 werden durch die Auswerteinheit 6 jeweils die Steuerungsdaten der ranghöheren Multirotor-Fluggerät Kontrolleinheit 4 als Steuerbefehl ausgegeben. Stimmen beispielsweise im Ausführungsbeispiel im Vergleichermittel 5b die Steuerungsdaten des Abgleichs der Multirotor-Fluggerät Kontrolleinheiten 4a und 4c genau bzw. im Toleranzbereich überein und es gibt keine Übereinstimmung zwischen den Sensordaten der Multirotor-Fluggerät Kontrolleinheiten 4a und 4b, so dienen dennoch als Steuerbefehl die Steuerungsdaten der Multirotor-Fluggerät Kontrolleinheit 4a. Die Auswerteeinheit 6 ist konfiguriert, um bei fehlender Übereinstimmung der in den Vergleichermittel 5 miteinander verglichenen Steuerungsdaten der Multirotor-Fluggerät Kontrolleinheiten 4 mittels einer mit der Auswerteeinheit 6 über ein Datenübertragungssystem 17 verbundenen Notabstiegseinrichtung 18 einen Notabstieg des Multirotor-Fluggeräts auszulösen und einzuleiten. Die Notabstiegseinrichtung 18 des Multirotor-Fluggeräts ist beispielsweise als ein pyrotechnisch ausgelöstes Fallschirmsystem ausgebildet. Hierzu stellt die Auswerteeinheit 6 einen Steuerbefehl für eine Notlandung, vorzugsweise innerhalb eines "sicheren" Gebiets, bspw. auf einer Wiese, bereit.

Der mittels der Auswerteeinheit 6 erzeugte Steuerbefehl wird mittels eines weiteren Datenübertragungssystems 19 zum Empfangen, Verarbeiten und Senden von Daten geeigneten Steuereinheiten 7 übermittelt. Die Steuereinheiten 7 steuern anhand der Steuerbefehle eine Antriebseinheit 20 an, die wiederum einen Rotor des Multirotor-Fluggeräts antriebt. Das Multirotor-Fluggerät weist mindestens vier, insbesondere wie hier im Ausführungsbeispiel sechs, solche Antriebseinheiten 20 auf. Die Steuereinheiten 7 sind derart ausgebildet, dass diese den ihnen für ihre zugeordnete Antriebeinheit 20 jeweiligen Steuerbefehl aus dem übermittelten Steuerbefehl extrahieren können.

Die Flugroute des Multirotor-Fluggeräts wird durch die Steuerbefehleinheit 8, bspw. durch einen in einem Cockpit 8a, 8b befindlichen Piloten mittels eines Eingabehilfsmittels 21, wie einem Joystick oder dgl., oder durch eine Bodenleitstelle 8c, bspw. ebenfalls durch einen dort befindlichen Piloten mittels eines Eingabehilfsmittels 21 oder einer Flugroutenplanung 22, vorgegeben. Die Steuerbefehleinheit 8 ist zum Empfangen, Verarbeiten und Senden von Daten geeignet und mittels Datenübertragungssystem 23 mit der Auswerteinheit 6, insbesondere mit den beiden Vergleichermitteln 5a und 5b, verbunden. Die Steuerbefehleinheit 8 umfasst insbesondere Eingabehilfsmittel 21, eine Hauptfluganzeige 24, eine Navigationsanzeige 25 und eine Warnhinweisanzeigeeinrichtung 26.

Die Datenübertragungssysteme 14, 16, 17, 19 und 23 sind bevorzugt als Feldbussysteme, bevorzugt ein serielles Bussystem, besonders bevorzugt ein Controller Area Network ausgebildet.

Die unterschiedlichen Komponenten der Steuerung 1 werden durch eine ebenfalls redundante Versorgungseinheit 27 mit elektrischer Leistung versorgt. Die Versorgungeinheit 27 ist bevorzugt als Akkumulator und/oder als Strömungsmaschine, insbesondere als eine Kleingasturbine, ausgebildet. Die Strömungsmaschine kann hierbei auch als sogenannter Range Extender zur Reichenweitenverlängerung durch Stromerzeugung dienen.

Alle Komponenten sind zur Konfiguration, Wartung oder dgl. über eine der Komponente zugewiesene Schnittstelle 28 ansprechbar, insbesondere bspw. eine RS485- oder einer RS232-Schnittstelle. Jede Komponente weist somit eine eigene Schnittstelle zur Konfiguration, Wartung oder dgl. auf.

Zusammengefasst umfasst das Verfahren somit die folgenden Schritte:
a) Ermittlung der Sensordaten durch die Sensoren des Flugdatensystems 2 und/oder des Flugkontrollsystems 3 mit einer Abtastrate, wobei die Abtastrate bevorzugt eine Frequenz von 1 Hz bis 2 kHz, insbesondere eine Frequenz von 200 Hz bis 1,0 kHz, aufweist,
b) Übermittlung der vom Flugdatensystem 2 und/oder der vom Flugkontrollsystem 3 ermittelten Sensordaten an die Multirotor-Fluggerät Kontrolleinheit 4,
c) Erstellen von Steuerungsdaten aus den Sensordaten durch die Multirotor-Fluggerät Kontrolleinheit 4,
d) Übermittlung der von der Multirotor-Fluggerät Kontrolleinheit 4 erstellten Steuerungsdaten an die Auswerteeinheit 6,
e) Auswerten der Steuerungsdaten durch die Auswerteeinheit 6 sowie Bereitstellen eines Steuerbefehls in Abhängigkeit vom Auswerteergebniswert,
f) Übermittlung des Steuerbefehls an die Steuereinheiten 7 der Antriebseinheiten 20 zur Steuerung der mindestens sechs Rotoren.

## Patentansprüche

1. Verfahren zur Steuerung eines Multirotor-Fluggeräts zum vertikalen Starten und Landen mit einer Versorgungseinheit (27) zur Versorgung von Multirotor-Fluggerät Komponenten mit elektrischer Leistung, sowie mit mindestens zwei zum Empfangen, Verarbeiten und Senden von Daten geeigneten Flugdatensystemen (2) und mindestens drei zum Empfangen, Verarbeiten und Senden von Daten geeigneten Flugkontrollsystemen (3) mit jeweils einem ein Positionsbestimmungssystem (11) und einen Magnetfeldsensor (12) und eine drei Beschleunigungssensoren und drei Drehratensensoren aufweisende inertiale Messeinheit (13) umfassenden Messsystem zur Bestimmung von Roll-Nick-Gier-Winkeländerungen und Beschleunigungen, mindestens drei zum Empfangen, Verarbeiten und Senden von Daten geeigneten Multirotor-Fluggerät Kontrolleinheiten (4), einer zum Empfangen, Verarbeiten und Senden von Daten geeigneten Auswerteeinheit (6), und einer zum Empfangen, Verarbeiten und Senden von Daten geeigneten Steuerbefehleinheit (8), wobei die Multirotor-Fluggerät Kontrolleinheiten (4) mit jeweils einem Flugkontrollsystem (3) und/oder jeweils einem Flugdatensystem (2) über ein Datenübertragungssystem (14) verbunden sind und die Multirotor-Fluggerät Kontrolleinheit (4) ausgebildet ist, um aus von dem Flugkontrollsystem (3) und/oder dem Flugdatensystem (2) bereitgestellten Sensordaten Steuerungsdaten erstellen zu können, und wobei die mit den Multirotor-Fluggerät Kontrolleinheiten (4) und mit der Steuerbefehleinheit (8) verbundene Auswerteeinheit (6) ausgebildet ist, um die Steuerungsdaten der Multirotor-Fluggerät Kontrolleinheiten (4) auswerten zu können und in Abhängigkeit von einem Auswertungsergebniswert einen Steuerbefehl bereitstellen zu können und mit mindestens vier, insbesondere sechs, eine Antriebseinheit (20) aufweisenden Rotoren, wobei jede Antriebseinheit (20) eine mittels eines Datenübertragungssystems (19) mit der Auswerteeinheit (6) verbundene, zum Empfangen, Verarbeiten und Senden von Daten geeignete Steuereinheit (7) aufweist, um die Antriebseinheiten (20) der mindestens vier, insbesondere sechs, Rotoren durch den den Steuereinheiten (7) übermittelten Steuerbefehl steuern zu können, das Verfahren umfassend die Schritte
a) Ermittlung der Sensordaten durch die Sensoren des Flugdatensystems (2) und/oder des Flugkontrollsystems (3) mit einer Abtastrate,
b) Übermittlung der vom Flugdatensystem (2) und/oder der vom Flugkontrollsystem (3) ermittelten Sensordaten an die Multirotor-Fluggerät Kontrolleinheit (4),
c) Erstellen von Steuerungsdaten aus den Sensordaten durch die Multirotor-Fluggerät Kontrolleinheit (4),
d) Übermittlung der von der Multirotor-Fluggerät Kontrolleinheit (4) erstellten Steuerungsdaten an die Auswerteeinheit (6),
e) Auswerten der Steuerungsdaten durch die Auswerteeinheit (6) sowie Bereitstellen eines Steuerbefehls in Abhängigkeit vom Auswerteergebniswert,
f) Übermittlung des Steuerbefehls an die Steuereinheiten (7) der Antriebseinheiten (20) zur Steuerung der mindestens vier, insbesondere sechs, Rotoren,
**dadurch gekennzeichnet, dass** die Auswerteeinheit (6) einen Rang in einer Vergleichermittel-Rangfolge des Multirotor-Fluggeräts einnehmende Vergleichermittel (5) umfasst, wobei jedes Vergleichermittel (5) jeweils die Steuerungsdaten der Multirotor-Fluggerät Kontrolleinheiten (4) miteinander vergleicht, wobei die Multirotor-Fluggerät Kontrolleinheiten (4) einen Rang in einer Multirotor-Fluggerät Kontrolleinheiten-Rangfolge aufweisen und das ranghöchste Vergleichermittel (5a) mit den Multirotor-Fluggerät Kontrolleinheiten (4a, 4b) des gleichen und untergeordneten Rangs verbunden ist und die anderen Vergleichermittel (5) jeweils mit den Multirotor-Fluggerät Kontrolleinheiten (4) des über-, gleich- und untergeordneten Rangs verbunden sind, wobei ein Vergleich der Steuerungsdaten entsprechend der Rangfolge der Vergleichermittel (5) vom ranghöchsten Vergleichermittel (5a) zum rangniedersten Vergleichermittel (5b) erfolgt, sobald der Vergleichsergebniswert keine Übereinstimmung innerhalb eines Toleranzbereichs bezogen auf die Steuerungsdaten feststellt, und die Auswerteeinheit (6) gemäß Schritt e) dann in Abhängigkeit von einem als Auswertungsergebniswert der Auswerteeinheit (6) verwendeten Vergleichsergebniswert einen Steuerbefehl bereitstellt, sobald dieser eine genaue Übereinstimmung der im Vergleichermittel (5) miteinander verglichenen Steuerungsdaten oder eine Übereinstimmung innerhalb eines Toleranzbereichs bezogen auf die Steuerungsdaten feststellt .

2. Verfahren nach Anspruch 1, **dadurch gekennzeichnet, dass** der durch die Auswerteeinheit (6) bereitgestellte Steuerbefehl den Steuerungsdaten der ranghöchsten Multirotor-Fluggerät Kontrolleinheit (4) entspricht, die die Steuerungsdaten für einen Vergleich im Vergleichermittel (5) übermittelt.

3. Verfahren nach Anspruch 1 oder 2, **dadurch gekennzeichnet, dass** der Toleranzbereich eine örtliche Toleranz und/oder eine zeitliche Toleranz aufweist.

4. Verfahren nach einem der Ansprüche 1 bis 3, **dadurch gekennzeichnet, dass** der Toleranzbereich eine Abweichung kleiner gleich 5 % bezogen auf die dem Vergleichermittel (5) übermittelten Steuerungsdaten aufweist, wobei zweckmäßigerweise der Toleranzbereich eine Abweichung kleiner gleich 5 % bezogen auf die ranghöchsten dem Vergleichermittel (5) übermittelten Steuerungsdaten aufweist.

5. Verfahren nach einem der Ansprüche 1 bis 4, **dadurch gekennzeichnet, dass** die Auswerteeinheit (6) einen Warnhinweis an die Steuerbefehleinheit (8) übermittelt, sobald der Auswerteergebniswert außerhalb des Toleranzbereichs liegt.

6. Verfahren nach einem der Ansprüche 1 bis 5, **dadurch gekennzeichnet, dass** die Auswerteeinheit (6) einen Steuerbefehl für eine Notlandung bereitstellt, sobald der Auswerteergebniswert des rangniedrigsten Vergleichermittels (5, 5b) außerhalb des Toleranzbereichs liegt.

7. Verfahren nach einem der vorhergehenden Ansprüche, **dadurch gekennzeichnet, dass** die Abtastrate gemäß Schritt a) eine Frequenz von 1 Hz bis 2 kHz aufweist, insbesondere von 200 Hz bis 1,0 kHz.

8. Multirotor-Fluggerät zum vertikalen Starten und Landen mit einer Versorgungseinheit (27) zur Versorgung von Multirotor-Fluggerät Komponenten mit elektrischer Leistung, sowie mit mindestens zwei zum Empfangen, Verarbeiten und Senden von Daten geeigneten Flugdatensystemen (2) und mindestens drei zum Empfangen, Verarbeiten und Senden von Daten geeigneten Flugkontrollsystemen (3) mit jeweils einem ein Positionsbestimmungssystem (11) und einen Magnetfeldsensor (12) und eine drei Beschleunigungssensoren und drei Drehratensensoren aufweisende inertiale Messeinheit (13) umfassenden Messsystem zur Bestimmung von Roll-Nick-Gier-Winkeländerungen und Beschleunigungen, mindestens drei zum Empfangen, Verarbeiten und Senden von Daten geeigneten Multirotor-Fluggerät Kontrolleinheiten (4), einer zum Empfangen, Verarbeiten und Senden von Daten geeigneten, über Vergleichermittel (5) verfügenden Auswerteeinheit (6), und einer zum Empfangen, Verarbeiten und Senden von Daten geeigneten Steuerbefehleinheit (8), wobei die Multirotor-Fluggerät Kontrolleinheiten (4) mit jeweils einem Flugkontrollsystem (3) und/oder jeweils einem Flugdatensystem (2) über ein Datenübertragungssystem (14) verbunden sind und die Multirotor-Fluggerät Kontrolleinheit (4) ausgebildet ist, um aus von dem Flugkontrollsystem (3) und/oder dem Flugdatensystem (2) bereitgestellten Sensordaten Steuerungsdaten erstellen zu können, und wobei die mit den Multirotor-Fluggerät Kontrolleinheiten (4) und mit der Steuerbefehleinheit verbundene Auswerteeinheit (6) ausgebildet ist, um die Steuerungsdaten der Multirotor-Fluggerät Kontrolleinheiten (4) auswerten zu können und in Abhängigkeit von einem Auswertungsergebniswert einen Steuerbefehl bereitstellen zu können und mit mindestens vier, insbesondere sechs, eine Antriebseinheit (20) aufweisenden Rotoren, wobei jede Antriebseinheit (20) eine mittels eines Datenübertragungssystems (19) mit der Auswerteeinheit (6) verbundene, zum Empfangen, Verarbeiten und Senden von Daten geeignete Steuereinheit (7) aufweist, um die Antriebseinheiten (20) der mindestens vier, insbesondere sechs, Rotoren durch den den Steuereinheiten (7) übermittelten Steuerbefehl steuern zu können, **dadurch gekennzeichnet, dass** die einen Rang in einer Vergleichermittel-Rangfolge einnehmenden Vergleichermittel (5) ausgebildet sind, um jeweils Steuerungsdaten der Multirotor-Fluggerät Kontrolleinheiten (4) miteinander zu vergleichen, wobei die Multirotor-Fluggerät Kontrolleinheiten (4) einen Rang in einer Multirotor-Fluggerät Kontrolleinheiten-Rangfolge aufweisen und das ranghöchste Vergleichermittel (5a) mit den Multirotor-Fluggerät Kontrolleinheiten (4a, 4b) des gleichen und untergeordneten Rangs verbunden ist und die anderen Vergleichermittel (5) jeweils mit den Multirotor-Fluggerät Kontrolleinheiten (4) des über-, gleich- und untergeordneten Rangs verbunden sind, wobei ein Vergleich der Steuerungsdaten entsprechend der Rangfolge der Vergleichermittel (5) vom ranghöchsten Vergleichermittel (5a) zum rangniedersten Vergleichermittel (5b) erfolgt, sobald der Vergleichsergebniswert keine Übereinstimmung innerhalb eines Toleranzbereichs bezogen auf die Steuerungsdaten feststellt, und die Auswerteeinheit (6) ausgebildet ist, um in Abhängigkeit von einem als Auswertungsergebniswert der Auswerteeinheit (6) verwendeten Vergleichsergebniswert einen Steuerbefehl bereitzustellen, sobald dieser eine genaue Übereinstimmung der im Vergleichermittel (5) miteinander verglichenen Steuerungsdaten oder eine Übereinstimmung innerhalb eines Toleranzbereichs bezogen auf die Steuerungsdaten feststellt.

9. Multirotor-Fluggerät nach Anspruch 8, **dadurch gekennzeichnet, dass** das Flugdatensystem (2) einen Sensor zur Geschwindigkeitsmessung (10), einen Sensor zur Höhenbestimmung, einen Sensor zur Temperaturbestimmung (9) und/oder einen Sensor zur Bestimmung der Steigrate aufweist.

10. Multirotor-Fluggerät nach Anspruch 8 oder 9, **dadurch gekennzeichnet, dass** die Auswerteeinheit (6) zwei Vergleichermittel (5a, 5b) aufweist.

11. Multirotor-Fluggerät nach einem der Ansprüche 8 bis 10, **dadurch gekennzeichnet, dass** das Multirotor-Fluggerät zwei Flugdatensysteme (2), drei Flugkontrollsysteme (3) und drei Multirotor-Fluggerät Kontrolleinheiten (4) umfasst und/oder zwei Multirotor-Fluggerät Kontrolleinheiten (4a, 4b) mit einem Flugdatensystem (2a, 2b) und einem Flugkontrollsystem (3a, 3b) und eine Multirotor-Fluggerät Kontrolleinheit (4c) mit einem Flugkontrollsystem (3) verbunden sind und/oder die Vergleichermittel (5) geeignet sind, um die Steuerungsdaten der Multirotor-Fluggerät Kontrolleinheiten (4) vergleichen zu können und abhängig von einem als Auswertungsergebniswert der Auswerteeinheit verwendeten Vergleichsergebniswert einen Steuerbefehl bereitstellen zu können.

12. Multirotor-Fluggerät nach einem der Ansprüche 8 bis 11, **dadurch gekennzeichnet, dass** das Flugdatensystem (2) und/oder das Flugkontrollsystem (3) geeignet ist Sensordaten hochfrequent mit einer Abtastrate von 1 Hz bis 2 kHz, insbesondere von 200 Hz bis 1,0 kHz zu ermitteln.

13. Multirotor-Fluggerät nach einem der Ansprüche 8 bis 12, **dadurch gekennzeichnet, dass** das Positionsbestimmungssystem (11) ein globales Navigationssatellitensystem oder ein globales Positionsbestimmungssystem ist und/oder das Datenübertragungssystem (14, 16, 17, 19, 23) ein Feldbussystem, bevorzugt ein serielles Bussystem, besonders bevorzugt ein Controller Area Network, ist und/oder die Versorgungseinheit (27) Akkumulatoren und/oder eine Strömungsmaschine, insbesondere eine Kleingasturbine, aufweist und/oder das Multirotor-Fluggerät mindestens ein Sensor (15) zur Radarhöhenbestimmung umfasst.

## Claims

1. A method for the control of a multirotor aircraft for the vertical take-off and landing, with a supply unit (27) for the supply of multirotor aircraft components with electrical power, as well as with at least two flight data systems (2) which are suitable for receiving, processing and sending data and at least three flight control systems (3) which are suitable for receiving, processing and sending data, each with a measuring system for determining roll-pitch-yaw angle changes, said measuring system comprising a position determining system (11) and/or a magnetic field sensor (12) and an inertial measuring unit (13) which comprises three acceleration sensors and three rotation rate sensors, with at least three multirotor aircraft control units (4) which are suitable for receiving, processing and sending data, with an evaluation unit (6) which is suitable for receiving, processing and sending data and with a control command unit (8) which is suitable for receiving, processing and sending data, wherein the multirotor aircraft control units (4) are each connected to a flight control system (3) and/or each to a flight data system (2) via a data transmission system (14) and the multirotor aircraft control unit (4) is designed to be able to create control data from the sensor data which is provided by the flight control system (3) and/or the flight data system (2), and wherein the evaluation unit (6) which is connected to the multirotor aircraft control units (4) and to the control command unit (8) is designed in order to be able to evaluate the control data of the multirotor aircraft control units (4) and to be able to provide a control command in dependence on an evaluation result value and with at least four, in particular six rotors which comprise a drive unit (20), wherein each drive unit (20) comprises a control unit (7) which is connected to the evaluation unit (6) by way of a data transmission system (19) and which is suitable for receiving, processing and sending data, in order to be able to control the drive units (20) of the at least four, in particular six rotors by the control command which is transmitted to the control units (7), wherein the method comprises the steps
a) determining the sensor data by way of the sensors of the flight data system (2) and/or of the flight control system (3) at a sampling rate,
b) transmitting the sensor data which is determined by the flight data system (2) and/or by the flight control system (3), to the multirotor aircraft control unit (4),
c) creating control data from the sensor data by way of the multirotor aircraft control unit (4),
d) transmitting the control data which is created by the multirotor aircraft control unit (4) to the evaluation unit (6),
e) evaluating the control data by way of the evaluation unit (6) as well as providing a control command in dependence on the evaluation result value,
f) transmitting the control command to the control units (7) of the drive units (20) for the control of the at least four, in particular six rotors,
**characterised in that** the evaluation unit (6) comprises a rank in a comparator means ranking of the multirotor aircraft, wherein each comparator means (5) compares the control data of the multirotor aircraft control units (4) with each other, wherein the multirotor aircraft control units (4) comprise a rank in a multirotor aircraft control unit ranking, and the highest ranking comparator means (5a) is connected to the multirotor aircraft control units (4a, 4b) of the same and lower rank, and the other comparator means (5) are each connected to the multirotor aircraft control units (4) of the higher, same and lower rank, wherein a comparison of the control data is performed according to the ranking of the comparator means (5) from the highest ranking comparator means (5a) to the lowest ranking comparator means (5b), as soon as the comparison result value detects no match within a tolerance range relative to the control data, and the evaluation unit (6) then provides a control command in accordance with step e) depending on a comparison result value used as the evaluation result value of the evaluation unit (6), as soon as this determines an exact match of the control data compared with each other in the comparator means (5) or a match within a tolerance range relative to the control data.

2. The method according to claim 1, **characterised in that** the control command which is provided by the evaluation unit (6) corresponds to the control data of the highest ranking multirotor aircraft control unit (4) which transmits the control data for a comparison in the deciding comparator means (5).

3. The method according to claim 1 or 2, **characterised in that** the tolerance range preferably has a spatial tolerance and/or a temporal tolerance.

4. The method according to one of claims 1 to 3, **characterised in that** the tolerance range comprises a deviation of smaller or equal to 5 % with respect to the control data transmitted to the comparator means (5), wherein expediently the tolerance range comprises a deviation of smaller or equal to 5 % with respect to the highest ranking control data transmitted to the comparator means (5).

5. The method according to one of the claims 1 to 4, **characterised in that** the evaluation unit (6) transfers a warning hint to the control command unit (8) as soon as the evaluation result value lies outside the tolerance range.

6. The method according to one of the claims 1 to 5, **characterised in that** the evaluation unit (6) provides a control command for an emergency landing as soon as the evaluation result value of the lowest ranking comparator means (5, 5b) lies outside the tolerance range.

7. The method according to one of the preceding claims, **characterised in that** the sampling rate according to step a) has a frequency of 1 Hz to 2 kHz, in particular from 200 Hz to 1.0 kHz.

8. A multirotor aircraft for the vertical take-off and landing with a supply unit (27) for the supply of multirotor aircraft components with electrical power, as well as with at least two flight data systems (2) which are suitable for receiving, processing and sending data and with at least three flight control systems (3) which are suitable for receiving, processing and sending data, each with a measuring system for determining roll-pitch-yaw angle changes, said measuring system comprising a position determining system (11) and/or a magnetic field sensor (12) and an inertial measuring unit (13) which comprises three acceleration sensors and three rotation rate sensors, with at least three multirotor aircraft control units (4) which are suitable for receiving, processing and sending data, with an evaluation unit (6) which is suitable for receiving, processing and sending data and with a control command unit (8) which is suitable for receiving, processing and sending data, wherein the multirotor aircraft control units (4) are each connected to a flight control system (3) and/or each to a flight data system (2) via a data transmission system (14) and the multirotor aircraft control unit (4) is designed to be able to create control data from sensor data which is provided by the flight control system (3) and/or the flight data system (2), and wherein the evaluation unit (6) which is connected to the multirotor aircraft control units (4) and to the control command unit is designed in order to be able to evaluate the control data of the multirotor aircraft control units (4) and to be able to provide a control command in dependence on an evaluation result value and with at least four, in particular six rotors which comprise a drive unit (20), wherein each drive unit (20) comprises a control unit (7) which is connected to the evaluation unit (6) by way of a data transmission system (19) and which is suitable for receiving, processing and sending data, in order to be able to control the drive units (20) of the at least four, in particular six rotors by the control command which is transmitted to the control units (7), **characterized in that** the comparator means (5) comprising a rank in a comparator means ranking are configured to compare control data of the multirotor aircraft control units (4) with each other, wherein the multirotor aircraft control units (4) comprise a rank in a multirotor aircraft control unit ranking, and the comparator means (5a) with the highest ranking is connected to the multirotor aircraft control units (4a, 4b) of the same and lower rank, and the other comparator means (5) are each connected to the multirotor aircraft control units (4) of the higher, same, and lower rank, wherein a comparison of the control data is performed according to the ranking of the comparator means (5) from the comparator means with the highest ranking (5a) to the lowest ranking comparator means (5b), as soon as the comparison result value detects no match within a tolerance range relative to the control data, and the evaluation unit (6) is configured to provide a control command depending on a comparison result value used as an evaluation result value of the evaluation unit (6), as soon as this determines an exact match of the control data compared with each other in the comparator means (5) or a match within a tolerance range relative to the control data.

9. The multirotor aircraft according to claim 8, **characterised in that** the flight data system (2) comprises a sensor for speed measurement (10), a sensor for determining the altitude, a sensor for determining the temperature (9) and/or a sensor for determining the rate of ascent.

10. The multirotor aircraft according to claim 8 or 9, **characterised in that** evaluation unit (6) comprises comparator means (5), in particular two comparator means (5a, 5b).

11. The multirotor aircraft according to one of claims 8 to 10, **characterised in that** the multirotor aircraft comprises two flight data systems (2), three flight control systems (3) and three multirotor aircraft control units (4) and/or two multirotor aircraft control units (4a, 4b) are connected to a flight data system (2a, 2b) and a flight control system (3a, 3b) and one multirotor aircraft control unit (4c) with one flight control system (3) and/or the comparator means (5) are suitable for comparing the control data of the multirotor aircraft control units (4) and for providing a control command depending on a comparison result value used as an evaluation result value of the evaluation unit.

12. The multirotor aircraft according to one of the claims 8 to 11, **characterised in that** the flight data system (2) and/or the flight control system (3) is suitable for determining sensor data at a high frequency with a sampling rate of 1 Hz to 2 kHz, in particular of 200 Hz to 1.0 kHz.

13. The multirotor aircraft according to one of the claims 8 to 12, **characterised in that** the position determining system (11) is a global navigation satellite system or a global positioning system and/or the data transmission system (14, 16, 17, 19, 23) is a field bus system, preferably a serial bus system, particular preferably a controller area network and/or the supply unit (27) comprises batteries and/or a flow machine, in particular a small gas turbine and/or the multirotor aircraft furthermore comprises at least one sensor (15) for determining the radar height.

## Revendications

1. Procédé de commande d'un aéronef multirotor pour le décollage et l'atterrissage verticaux avec une unité d'alimentation (27) pour l'alimentation de composants d'aéronef multirotor en puissance électrique, ainsi qu'avec au moins deux systèmes de données de vol (2) adaptés pour la réception, le traitement et l'émission de données et au moins trois systèmes de contrôle de vol (3) adaptés pour la réception, le traitement et l'émission de données, chacun avec un système de mesure comprenant un système de localisation (11) et un capteur de champ magnétique (12) et une unité de mesure inertielle (13) présentant trois capteurs d'accélération et trois capteurs de vitesse de rotation pour la détermination de changements d'angle de roulis-tangage-lacet et d'accélérations, au moins trois unités de contrôle d'aéronef multirotor (4) adaptées pour la réception, le traitement et l'émission de données, une unité d'évaluation (6) adaptée pour la réception, le traitement et l'émission de données, et une unité d'instruction de commande (8) adaptée pour la réception, le traitement et l'émission de données, dans lequel les unités de contrôle d'aéronef multirotor (4) sont reliées à respectivement un système de contrôle de vol (3) et/ou à respectivement un système de données de vol (2) via un système de transmission de données (14) et l'unité de contrôle d'aéronef multirotor (4) est réalisée pour pouvoir créer des données de commande à partir de données de capteur fournies par le système de contrôle de vol (3) et/ou le système de données de vol (2), et dans lequel l'unité d'évaluation (6) reliée aux unités de contrôle d'aéronef multirotor (4) et à l'unité d'instruction de commande (8) est réalisée pour pouvoir évaluer les données de commande des unités de contrôle d'aéronef multirotor (4) et pour pouvoir fournir une instruction de commande en fonction d'une valeur de résultat d'évaluation et avec au moins quatre, en particulier six, rotors présentant une unité d'entraînement (20), dans lequel chaque unité d'entraînement (20) présente une unité de commande (7) reliée à l'unité d'évaluation (6) au moyen d'un système de transmission de données (19), adaptée pour recevoir, traiter et émettre des données, afin de pouvoir commander les unités d'entraînement (20) des au moins quatre, en particulier six, rotors à l'aide de l'instruction de commande transmise aux unités de commande (7), le procédé comprenant les étapes de
a) détermination des données de capteur par les capteurs du système de données de vol (2) et/ou du système de contrôle de vol (3) avec une vitesse d'échantillonnage,
b) transmission à l'unité de contrôle d'aéronef multirotor (4) des données de capteur déterminées par le système de données de vol (2) et/ou par le système de contrôle de vol (3),
c) création de données de commande à partir des données de capteur par l'unité de contrôle d'aéronef multirotor (4),
d) transmission à l'unité d'évaluation (6) des données de commande créées par l'unité de contrôle d'aéronef multirotor (4),
e) évaluation des données de commande par l'unité d'évaluation (6) ainsi que fourniture d'une instruction de commande en fonction de la valeur de résultat d'évaluation,
f) transmission de l'instruction de commande aux unités de commande (7) des unités d'entraînement (20) pour commander les au moins quatre, notamment six, rotors,
**caractérisé en ce que** l'unité d'évaluation (6) comprend des moyens comparateurs (5) occupant un rang dans une hiérarchie de moyens comparateurs de l'aéronef multirotor, dans lequel chaque moyen comparateur (5) compare respectivement les données de commande des unités de contrôle d'aéronef multirotor (4) entre elles, dans lequel les unités de contrôle d'aéronef multirotor (4) présentent un rang dans une hiérarchie d'unités de contrôle d'aéronef multirotor et le moyen comparateur de rang le plus élevé (5a) est relié aux unités de contrôle d'aéronef multirotor (4a, 4b) de même rang et de rang inférieur et les autres moyens comparateurs (5) sont respectivement reliés aux unités de contrôle d'aéronef multirotor (4) de rang supérieur, de même rang et de rang inférieur, dans lequel une comparaison des données de commande en fonction de la hiérarchie des moyens comparateurs (5) s'effectue du moyen comparateur de rang le plus élevé (5a) au moyen comparateur de rang le plus bas (5b), dès que la valeur de résultat de comparaison n'établit pas de concordance dans une plage de tolérance par rapport aux données de commande, et que l'unité d'évaluation (6) selon l'étape e) fournit alors une instruction de commande en fonction d'une valeur de résultat de comparaison utilisée comme valeur de résultat d'évaluation de l'unité d'évaluation (6), dès que celle-ci fournit une concordance exacte des données de commande comparées entre elles dans le moyen comparateur (5) ou une concordance dans une plage de tolérance par rapport aux données de commande.

2. Procédé selon la revendication 1, **caractérisé en ce que** l'instruction de commande fournie par l'unité d'évaluation (6) correspond aux données de contrôle de l'unité de commande d'aéronef multirotor (4) de rang le plus élevé qui transmet les données de commande pour une comparaison dans le moyen comparateur (5).

3. Procédé selon la revendication 1 ou 2, **caractérisé en ce que** la plage de tolérance présente une tolérance locale et/ou une tolérance temporelle.

4. Procédé selon l'une quelconque des revendications 1 à 3, **caractérisé en ce que** la plage de tolérance présente un écart inférieur ou égal à 5 % par rapport aux données de commande transmises au moyen comparateur (5), dans lequel la plage de tolérance présente de manière appropriée un écart inférieur ou égal à 5 % par rapport aux données de commande de rang le plus élevé transmises au moyen comparateur (5).

5. Procédé selon l'une quelconque des revendications 1 à 4, **caractérisé en ce que** l'unité d'évaluation (6) transmet un avertissement à l'unité d'instruction de commande (8) dès que la valeur de résultat d'évaluation est en dehors de la plage de tolérance.

6. Procédé selon l'une quelconque des revendications 1 à 5, **caractérisé en ce que** l'unité d'évaluation (6) fournit une instruction de commande pour un atterrissage d'urgence dès que la valeur de résultat d'évaluation du moyen comparateur de rang le plus bas (5, 5b) est en dehors de la plage de tolérance.

7. Procédé selon l'une quelconque des revendications précédentes,
**caractérisé en ce que** la vitesse d'échantillonnage selon l'étape a) présente une fréquence de 1 Hz à 2 kHz, en particulier de 200 Hz à 1,0 kHz.

8. Aéronef multirotor pour le décollage et l'atterrissage verticaux avec une unité d'alimentation (27) pour l'alimentation de composants d'aéronef multirotor en puissance électrique, ainsi qu'avec au moins deux systèmes de données de vol (2) adaptés pour la réception, le traitement et l'émission de données et au moins trois systèmes de contrôle de vol (3) adaptés pour la réception, le traitement et l'émission de données, chacun avec un système de mesure comprenant un système de localisation (11) et un capteur de champ magnétique (12) et une unité de mesure inertielle (13) présentant trois capteurs d'accélération et trois capteurs de vitesse de rotation pour la détermination de changements d'angle de roulis-tangage-lacet et d'accélérations, au moins trois unités de contrôle d'aéronef multirotor (4) adaptées pour la réception, le traitement et l'émission de données, une unité d'évaluation (6) adaptée pour la réception, le traitement et l'émission de données, disposant de moyens comparateurs (5), et une unité d'instruction de commande (8) adaptée pour la réception, le traitement et l'envoi de données, dans lequel les unités de contrôle d'aéronef multirotor (4) sont reliées respectivement à un système de contrôle de vol (3) et/ou respectivement à un système de données de vol (2) via un système de transmission de données (14) et l'unité de contrôle d'aéronef multirotor (4) est réalisée pour pouvoir créer des données de commande à partir de données de capteur fournies par le système de contrôle de vol (3) et/ou le système de données de vol (2), et dans lequel l'unité d'évaluation (6) reliée aux unités de contrôle d'aéronef multirotor (4) et à l'unité d'instruction de commande est réalisée pour pouvoir évaluer les données de commande des unités de contrôle d'aéronef multirotor (4) et pour pouvoir fournir une instruction de commande en fonction d'une valeur de résultat d'évaluation et avec au moins quatre, en particulier six, rotors présentant une unité d'entraînement (20), dans lequel chaque unité d'entraînement (20) présente une unité de commande (7) reliée à l'unité d'évaluation (6) au moyen d'un système de transmission de données (19), adaptée pour recevoir, traiter et émettre des données, afin de pouvoir commander les unités d'entraînement (20) des au moins quatre, en particulier six, rotors à l'aide de l'instruction de commande transmise aux unités de commande (7), **caractérisé en ce que** les moyens comparateurs (5) occupant un rang dans une hiérarchie de moyens comparateurs sont réalisés pour comparer respectivement les données de commande des unités de contrôle d'aéronef multirotor (4) entre elles, dans lequel les unités de contrôle d'aéronef multirotor (4) présentent un rang dans une hiérarchie d'unités de contrôle d'aéronef multirotor et le moyen comparateur de rang le plus élevé (5a) est relié aux unités de contrôle d'aéronef multirotor (4a, 4b) de même rang et de rang inférieur et les autres moyens comparateurs (5) sont respectivement reliés aux unités de contrôle d'aéronef multirotor (4) de rang supérieur, de même rang et de rang inférieur, dans lequel une comparaison des données de commande en fonction de la hiérarchie des moyens comparateurs (5) s'effectue du moyen comparateur de rang le plus élevé (5a) au moyen comparateur de rang le plus bas (5b), dès que la valeur de résultat de comparaison n'établit pas de concordance dans une plage de tolérance par rapport aux données de commande, et l'unité d'évaluation (6) est réalisée afin de fournir une instruction de commande en fonction d'une valeur de résultat de comparaison utilisée comme valeur de résultat d'évaluation de l'unité d'évaluation (6), dès que celle-ci établit une concordance exacte des données de commande comparées entre elles dans le moyen comparateur (5) ou une concordance dans une plage de tolérance par rapport aux données de commande.

9. Aéronef multirotor selon la revendication 8, **caractérisé en ce que** le système de données de vol (2) présente un capteur de mesure de vitesse (10), un capteur de détermination d'altitude, un capteur de détermination de température (9) et/ou un capteur de détermination de vitesse ascensionnelle.

10. Aéronef multirotor selon la revendication 8 ou 9, **caractérisé en ce que** l'unité d'évaluation (6) présente deux moyens comparateurs (5a, 5b).

11. Aéronef multirotor selon l'une quelconque des revendications 8 à 10, **caractérisé en ce que** l'aéronef multirotor comprend deux systèmes de données de vol (2), trois systèmes de contrôle de vol (3) et trois unités de contrôle d'aéronef multirotor (4) et/ou deux unités de contrôle d'aéronef multirotor (4a, 4b) sont reliées à un système de données de vol (2a, 2b) et à un système de contrôle de vol (3a, 3b) et une unité de contrôle d'aéronef multirotor (4c) à un système de contrôle de vol (3) et/ou les moyens comparateurs (5) sont adaptés pour pouvoir comparer les données de commande des unités de contrôle d'aéronef multirotor (4) et pour pouvoir fournir une instruction de commande en fonction d'une valeur de résultat de comparaison utilisée comme valeur de résultat d'évaluation de l'unité d'évaluation.

12. Aéronef multirotor selon l'une quelconque des revendications 8 à 11, **caractérisé en ce que** le système de données de vol (2) et/ou le système de contrôle de vol (3) est adapté pour déterminer des données de capteur à haute fréquence avec une vitesse d'échantillonnage de 1 Hz à 2 kHz, en particulier de 200 Hz à 1,0 kHz.

13. Aéronef multirotor selon l'une quelconque des revendications 8 à 12, **caractérisé en ce que** le système de localisation (11) est un système mondial de navigation par satellite ou un système mondial de localisation et/ou le système de transmission de données (14, 16, 17, 19, 23) est un système de bus de terrain, de préférence un système de bus série, de manière particulièrement préférée un réseau CAN, et/ou l'unité d'alimentation (27) présente des accumulateurs et/ou une turbomachine, en particulier une petite turbine à gaz, et/ou l'aéronef multirotor comprend au moins un capteur (15) de détermination d'altitude radar.
